Europäisches Patentamt

European Patent Office

Office européen des brevets

(19)

(11) Publication number: **0 253 422**
**A1**

## (12) EUROPEAN PATENT APPLICATION

(21) Application number: **87201199.4**

(22) Date of filing: **23.06.87**

(51) Int. Cl.⁴: **G01B 5/25**

(30) Priority: **07.07.86 SE 8603010**

(43) Date of publication of application:
**20.01.88 Bulletin 88/03**

(84) Designated Contracting States:
**DE ES FR GB IT**

(71) Applicant: **AB Samefa**
**Box 7 Granlidsvägen 4**
**S-736 00 Kungsör(SE)**

(72) Inventor: **Bergström, Hans Roar**
**Blomstervägen 2**
**S-736 00 Kungsör(SE)**

(74) Representative: **Nydell, Peder**
**Nydells Patentbyra Storgatan 57**
**S-392 31 Kalmar(SE)**

(54) **A measuring location sensor for linear measuring devices.**

(57) A measuring location sensor for use with linear measurement devices intended for measuring or checking the position of a pre-determined measuring location on an object, e.g. the chassis of a motor vehicle. The measuring location consists of a hole (24) located in the object or the head (27) of a screw, or the like. The sensor includes a probe (26) which can be displaced linearly in a pre-determined direction and which is dimensioned to abut the defining edge of the hole or the defining edge of the opening (28a) at one end of an open-ended sleeve (28), the length of which is known and the other end of which is inserted over the protruding element. The probe tip (26) of the probe has the form of a sphere of pre-determined, known radius (R), such as to achieve precise and anambiguous abutment with the defining edge of the hole (24) or the sleeve-opening (28a), irrespective of whether the hole or the protruding element is located on a horizontal surface or an inclined surface of the object.

FIG. 3

## A measuring location sensor for linear measuring devices

### TECHNICAL FIELD

The present invention relates to a measuring location sensor for use with a linear measuring device, for measuring or checking the position of a pre-determined measuring location on an object, e.g. the chassis of an automative vehicle in relation to a reference point, said measuring location being either a hole present in the object or an element projecting outwardly therefrom, e.g. the head of a screw, and said sensor incorporating a measuring probe which is linearly displaceable in a predetermined direction and which includes a probe tip which is dimensioned for abutment with the defining edge of the location hole or with the defining edge of one end-opening of an open-ended sleeve of known length, the other end of which sleeve is intended to be fitted over the outwardly projecting element.

### BACKGROUND PRIOR ART

Normally, the measuring location sensor of such known linear measuring devices comprises a probe which can be moved in a first coordinate direction and which is carried by a measuring slide capable of being moved in a second and a third coordinate direction. The position of the measuring device can therewith be read-off on three linear scales corresponding to each of the three coordinate directions.

The probe of these known linear measuring devices includes a conical, graduated, probe tip which can be raised and lowered in a sleeve-like holder and adjusted in relation to a selected point or location on the object, e.g. the chassis of a motor vehicle. This measuring location is either a round hole in the chassis, or the outwardly protruding head of a screw or bolt. In this latter case, the probe tip coacts with a sleeve which fits over the head of the screw.

However, when the measuring location, e.g. the hole or screw-head, is located on a chassis surface that is inclined to the horizontal, it is impossible to obtain precise abutment of the known probe tip with the measuring location. Consequently, the readings obtained with regard to the position of the probe tip may differ, depending on the position of abutment of the tip with the hole or the sleeve. In order to overcome this problem, it has been necessary when measuring or checking locations located on inclined surfaces to also incline the probe tip to a corresponding extent.

### SUMMARY OF THE INVENTION

Consequently, an object of the present invention is to provide a measuring location sensor of the aforesaid kind which can be brought into precise, unambiguous abutment with measuring locations, irrespective of whether these locations are found on a horizontal or an inclined chassis-surface, and without needing to tilt the sensor.

This object is achieved in accordance with the invention with a probe tip of spherical configuration having a predetermined, known radius, such as to permit precise and unambiguous abutment with a measuring location, irrespective of whether this location is found on a horizontal or an inclined surface of the object (chassis).

Thus, since the reference point on the linear measurement scale is not corresponded by the position of a conical probe tip, but instead by the position of the centre point of a spherical body, a correct measuring result is obtained, irrespective of the angle at which the probe attends the measuring location.

### BRIEF DESCRIPTION OF THE DRAWINGS

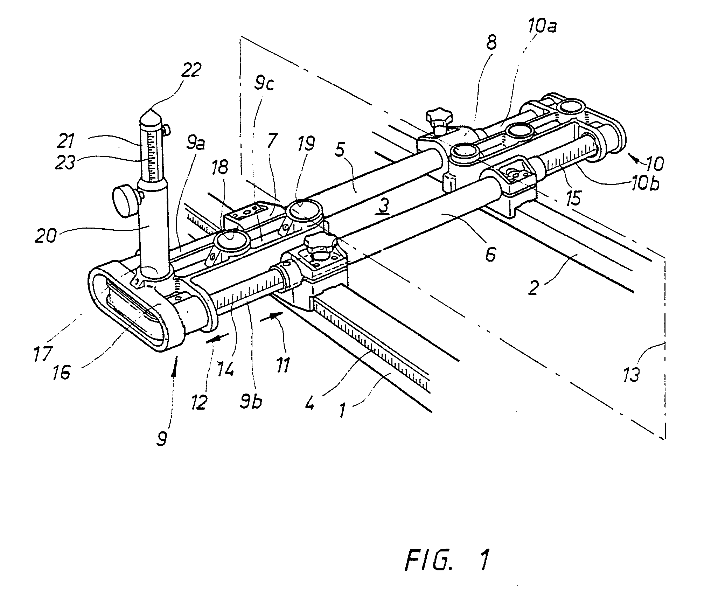

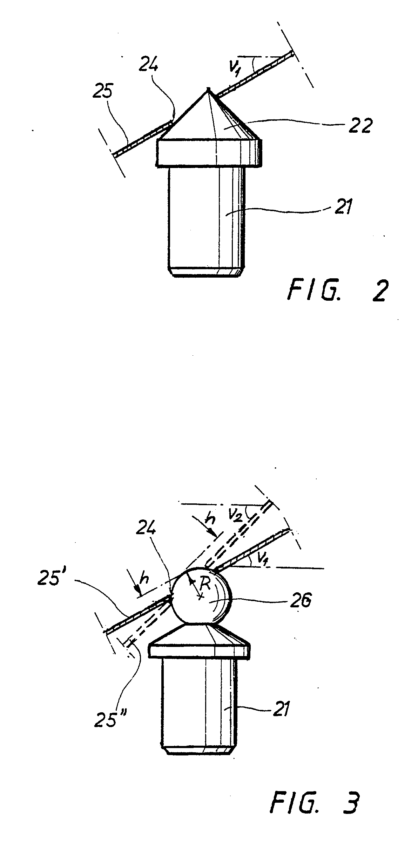

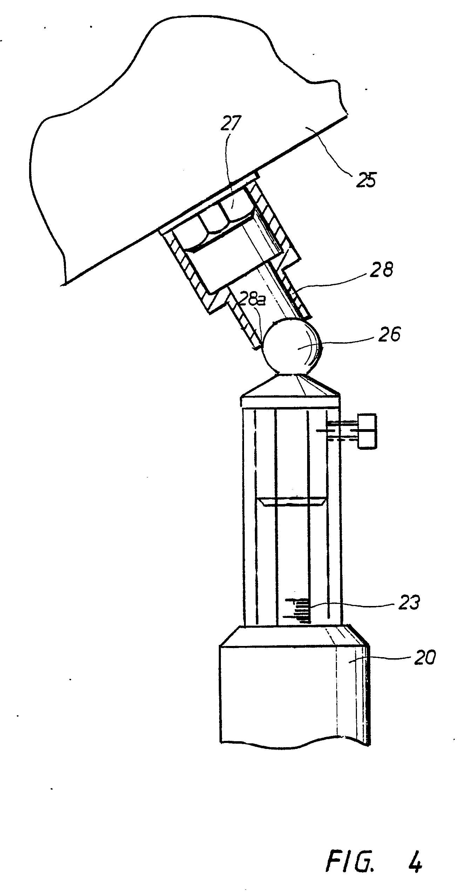

Figure 1 illustrates a linear measuring device of known construction. Figure 2 illustrates schematically the use of a known measuring location sensor in the form of a probe tip. Figures 3 and 4 illustrate schematically the use of a measuring location sensor constructed in accordance with the invention.

### DESCRIPTION OF A PREFERRED EMBODIMENT

Figure 1 illustrates part of a known linear measuring device which comprises two elongated, horizontal, mutually parallel and rectilinear steel measuring beams or the like 1 and 2 that are incorporated in a beam frame structure (not shown) forming a so-called measuring bridge intended for determining measurments on a damaged vehicle chassis. Such measuring bridges are intended to be placed in a known manner, beneath the damaged chassis (not shown) and normally rest on an alignment bench, or straightening bench, or some other foundation surface. Since such measuring bridges are known per se, they will not be described in detail here.

The beams 1 and 2 have slidably mounted theron a carriage, generally referenced 3, which can be moved parallel to a reference surface 13, as defined in more detail hereinafter, wherewith the extent to which the carriage is displaced relative to a given starting point (not shown) can be read-off from a graduated scale 4 rigidly connected to the outer surface of one measuring beam 1. The carriage 3 comprises essentially two mutually, hollow-cylindrical metal tubes 5 and 6 which extend transversely to the longitudinal axis of the beams 1 and 2 and which are carried by two metallic glide-shoes 7 and 8 capable of being displaced along the beams 1 and 2.

The carriage 3 forms a holder for two substantially U-shaped metallic measuring slides generally referenced 9 and 10, which can be displaced rectilinearly transversely to the movement direction of the carriage or holder 3. The slides may be made of steel for example, and each comprises parallel cylindrical arms 9a, 9b and 10a, 10b respectively which slide in respective hollow tubes 5 and 6, these tubes thus forming slide channels.

The measuring slides 9 and 10 can be moved into and out of the tubes 5 and 6 of the carriage structure 3 independently of one another, as indicated by the arrows 11 and 12 in Figure 1. The measuring slides 9 and 10 thus move in the horizontal plane, at right angles to the direction of movement of the carriage 3. The position of the slides is related to a reference point, which in the illustrated embodiment consists of a vertical elongated plane 13 extending through the bridge, said plane being shown in chain lines. The position of respective slides in relation to the reference plane can be read-off from a linear scale 14 and 15 on a respective slide 9b and 10b. Since the slides 9 and 10 are mutually identical, only the slide 9 will be described hereinafter

The tubular legs 9a and 9b of the slide 9 are held apart by a metallic intermediate member or insert 17. An additional arm 9c extends from the insert 16 centrally between the two arms 9a and 9b, and parallel therewith. The intermediate arm 9c has provided therein three vertically extending holes 17-19 which are dimensioned to receive a measuring location sensor, e.g. in the form of probe 21 which can be raised and lowered in a holding sleeve 20 and which incorporates a probe tip 21. The tip 22 has a conical configuration and can be brought into abutment with, or into engagement with, a selected measuring location on an object whose measurements are to be ascertained, in this case the chassis of a vehicle, as indicated in Figure 2. The tip 22 thus defines the position of the slide 9 in relation to the reference plane 13, i.e. the measurement read-off from the linear scale 14 on the slide represents the distance of the tip 22 from the reference plane 13. The probe tip 21 has provided thereon, in a known manner, a measuring scale 23, and the tip 21, or the sleeve 20 holding the tip, can be rotated so as to bring the scale 23 to a position in which the scale can be read-off.

Figure 2 illustrates the known conical probe tip 22 when used in conjunction with a measuring location in the form of a round hole 24 located in a chassis surface that is inclined to the horizontal at an angle VI (30°). In order to obtain a correct measuring result, it is necessary to incline the probe tip 22, such that the tip forms a right angle with the inclined surface 25.

Figure 3 illustrates a probe tip formed in accordance with the invention, in which the conical configuration of the known tip 22 has been replaced with a spherical configuration; such as to provide a ball-shaped probe tip 26. It will be seen that the spherical tip will provide a correct measuring result, irrespective of whether the measuring location 24 is located on a horizontal chassis surface or a surface that is inclined to the horizontal. Figure 3 illustrates the inventive probe tip 26 when applied to a measuring location at two mutually different angles VI (30°) and V2 (45°) on chassis surfaces 25′ and 25″ respectively. It will be seen that the same depth of tip penetration h is obtained in both cases.

As above inferred, the measuring location is indicated in Figure 3 has the form of a round hole 24 in a chassis surface.

Figure 4 illustrates the manner in which the novel measuring probe is used when the measuring location consists of a protrusion instead of a round hole, e.g. the head of a screw 27. As will be clearly seen, there is fitted over the screw head 27 a cylindrical sleeve 28. which has preferably the same internal diameter as the round hole 24, and the spherical probe-tip 26 is placed in abutment with the circular defining edge of the free end-opening 28a of the sleeve. Having knowledge of the length of the sleeve 28, it is an easy matter to calculate the position of the measuring location 27, i.e. the screw head.

The sleeve 28 is either placed loosely over the screw head 27, or may be secured to the probe tip 26 by means of an articulated joint, the nature of which will be obvious to the skilled person.

The radius R of the spherical tip 26 is greater than the radius of the round hole 24 and of the end-opening 28a of the sleeve. Consequently, only part of the tip 26 will penetrate into the hole, or into the free-end of the sleeve, preferably to a depth h of only a few millimetres. Since the spherical tip 26 lies against a circular defining edge of the end-opening 28, abutment of the tip will be clearly and unambiguously defined.

It will be understood that when using the inventive spherical probe-tip 26 illustrated in Figures 3 and 4, it is necessary to take into account the radius R of the tip, since the centre point of the tip, i.e. the centre of the sphere, is used as a reference for the measuring scale on the probe. The extent h to which the spherical tip enters the round hole or the free-end of the sleeve must also be taken into account, as must also the length of the sleeve 28 in some instances. Consequently, corrections with regard to radius must be made when using probe tips of mutually different radii. Values corresponding to radius, penetration depths and the length of the sleeve may, of course, be inserted into a dataprocessor or like device, so that the operator is able to measure or check the positions of measuring locations without needing to make the aforesaid necessary corrections himself.

The measuring location sensor according to the present invention is not restricted to use in linear measuring devices which operate in three mutually perpendicular coordinates X-Y-Z, but can also be used with linear measuring devices which operate in polar coordinates, i.e. in devices where the probe is mounted on an arm which can be swung in horizontal and/or vertical directions, as described in a a co-terminous patent relating to "An arrangement for evaluating the extent of deformation of a deformed object".

## Claims

1. A measuring location sensor for use with linear measuring devices intended for measuring or checking the position of a pre-determined measuring location on an object, e.g. the chassis of a motor vehicle, in relation to a fixed reference point, the measuring location consisting of a hole (24) located in the object (25) or an element projecting therefrom, e.g. the head (27) of a screw, said sensor including a probe (21) which can be displaced linearly in a pre-determined direction and has provided thereon a probe tip which is dimensioned to abut the defining edge of said hole or the defining edge of the opening (28a) at one end of an open-ended sleeve (28), the length of which is known and the other end of which is inserted over the protruding element,
**characterized** in that the probe tip (26) has the form of a sphere of pre-determined, known radius (R), such as to achieve precise and unambiguous abutment with the defining edge of said hole (24) or said sleeve-opening (28a), irrespective of whether the hole or the protruding element is located on a horizontal surface or an inclined surface of said object (25).

2. A sensor according to Claim 1, **characterized** in that the radius (R) of the probe-tip is greater than the radius of said hole (24) or said end-opening (28a) of the sleeve (28).

FIG. 1

FIG. 2

FIG. 3

27

25

28

28a

26

23

20

FIG. 4

| | **DOCUMENTS CONSIDERED TO BE RELEVANT** | | EP 87201199.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - C - 733 370 (JUNKERS)<br>* Totality; especially fig. 9 *<br>-- | 1,2 | G 01 B 5/25 |
| A | US - A - 4 366 624 (BERGSTROM)<br>* Totality *<br>-- | 1 | |
| A | US - A - 4 490 918 (CLAUSEN)<br>* Totality *<br>-- | 1 | |
| A | FR - A1 - 2 315 078 (FACOM)<br>* Totality; especially fig. 7,8 *<br>---- | | |

TECHNICAL FIELDS
SEARCHED (Int. Cl.4)

G 01 B   5/00

G 01 B   7/00

G 01 B  21/00

The present search report has been drawn up for all claims

| Place of search | Date of completion of the search | Examiner |
|---|---|---|
| VIENNA | 12-11-1987 | TOMASSELLI |